# FASCICULE DE BREVET EUROPEEN

(11) **EP 1 084 915 B1**
(45) Date de publication et mention de la délivrance du brevet: **26.11.2003**
(21) Numéro de dépôt: 00402506.0
(22) Date de dépôt: 12.09.2000
(51) Int. Cl.: B60R 25/02

(54) **Antivol de direction de véhicule automobile**
Kraftfahrzeuglenkungsdiebstahlsicherung
Vehicle steering anti-theft device

(30) Priorité: 17.09.1999 FR 9911635
(43) Date de publication de la demande: 21.03.2001
(73) Titulaire: VALEO SECURITE HABITACLE S.A.S., 94042 Créteil Cédex (FR)
(72) Inventeur: Canard, Louis, 58000 Nevers (FR)
(74) Mandataire: Hervouet, Sylvie

(56) Documents cités:
- EP-A- 0 210 962
- FR-A- 2 601 990

## Description

La présente invention concerne un antivol de direction de véhicule automobile.

L'invention concerne plus particulièrement un antivol de direction de véhicule automobile du type comportant un boîtier dans lequel un verrou est monté à rotation entre une position angulaire de repos dans laquelle une clef conforme peut être introduite, d'arrière en avant, ou retirée axialement, et au moins une position angulaire d'utilisation, dans laquelle la clef ne peut être extraite du verrou, le verrou comportant un organe de sortie rotatif formant came qui est susceptible de coopérer avec un doigt de commande porté par un pêne pour commander les déplacements de ce dernier qui est monté coulissant dans le boîtier selon une direction axiale, entre une position avant d'antivol vers laquelle il est sollicité élastiquement et dans laquelle il fait saillie axialement vers l'avant à travers une ouverture du boîtier pour bloquer en rotation un organe de la colonne de direction lorsque le verrou est en position de repos, clef extraite, et une position arrière escamotée à l'intérieur du boîtier. Un tel antivol est connu de EP-A-0 210 962 et de FR-A-2 601 990.

On connaît de nombreuses conceptions d'un tel type d'antivol qui est plus fréquemment utilisé pour empêcher les vols de véhicule, et notamment les vols de voitures particulières.

De nombreux perfectionnements ont été apportés aux antivols de ce type, qui concernent notamment le verrou, afin d'améliorer la résistance de l'antivol aux différents modes d'effraction imaginés par les voleurs de véhicules.

On constate toutefois qu'il subsiste une possibilité d'effraction au cours de laquelle le voleur tente d'agir sur le pêne proprement dit pour repousser celui-ci à l'intérieur du boîtier de l'antivol et libérer la colonne de direction.

On a déjà proposé dans la demande de brevet français FR-A-2.788.477 du 15.01.1999 correspondant à la demande interférente EP-A-1 020 336 une nouvelle conception d'un antivol de direction du type mentionné précédemment qui remédie à cet inconvénient en empêchant toute possibilité de repousser le pêne à l'intérieur du boîtier lorsque l'antivol est en position de repos, c'est-à-dire en position de blocage en rotation de la colonne de direction.

A cet effet, ce document propose un antivol de direction de véhicule automobile du type comportant un boîtier dans lequel un verrou est monté à rotation entre une position angulaire de repos dans laquelle une clef conforme peut être introduite, d'arrière en avant, ou retirée axialement, et au moins une position angulaire d'utilisation, dans laquelle la clef ne peut être extraite du verrou, le verrou comportant un organe de sortie rotatif formant came qui est susceptible de coopérer avec un organe de commande en forme de doigt de commande porté par un pêne pour commander les déplacements de ce dernier qui est monté coulissant dans le boîtier, selon une direction axiale, entre une position avant d'antivol vers laquelle il est sollicité élastiquement et dans laquelle il fait saillie axialement vers l'avant à travers une ouverture du boîtier pour bloquer en rotation un organe de la colonne de direction lorsque le verrou est en position de repos, clef extraite, et une position arrière escamotée à l'intérieur du boîtier, et du type dans lequel :
- le pêne porte un doigt de blocage escamotable qui fait saillie radialement vers l'axe pour être reçu dans un logement de blocage formé dans une face latérale en vis-à-vis de l'organe de sortie, d'orientation axiale, lorsque le pêne est en position avant d'antivol, pour empêcher ou limiter tout déplacement du pêne vers sa position arrière escamotée ;
- le doigt de blocage s'efface automatiquement lors de la rotation du verrou, depuis sa position de repos vers sa position d'utilisation ;
- et le pêne est retenu axialement en position arrière escamotée, en présence d'une clef, par un organe de retenue de pêne qui est monté mobile entre une position effacée, en l'absence de clef, et une position de retenue en présence d'une clef.

Dans ce document, le doigt de blocage est monté coulissant radialement dans le pêne à l'encontre d'un ressort de rappel qui le sollicite en permanence radialement vers l'intérieur en direction du logement de blocage, et le doigt de blocage fait aussi fonction de doigt de commande.

Cette conception est satisfaisante du point de vue fonctionnel, mais elle présente certains inconvénients auxquels la présente invention entend remédier.

Notamment, la conception du doigt de commande et de blocage dans laquelle ses déplacements sont guidés en coulissement radial dans un fourreau cylindrique avec un ressort axial de compression qui le sollicite en permanence présente des risques de coincement, notamment du fait que des efforts transversaux s'appliquent en porte à faux à l'extrémité libre fonctionnelle du doigt de blocage.

Par ailleurs, cette conception nécessite un ressort spécifique de rappel pour le doigt de blocage et un autre ressort pour solliciter élastiquement en permanence le pêne vers sa position d'antivol. Outre le nombre de composants élevé auxquels cette conception fait appel, leur assemblage est aussi complexe et coûteux et la fixation du corps cylindrique creux sur la tirette en tôle est difficile à réaliser.
Enfin, le corps du doigt en forme de fourreau qui fait fonction de doigt de commande des déplacements du pêne agit sur ce dernier indirectement par l'intermédiaire d'un ressort de "sommet de cannelure" qui applique lui aussi en permanence un effort en porte à faux sur le corps du doigt cylindrique dont les conditions de guidage dans la lumière axiale formée dans le pêne sont par ailleurs difficiles à maîtriser.

Afin de remédier à ces inconvénients, l'invention propose un antivol du type mentionné précédemment décrit dans FR-A-2 788 477, caractérisé en ce que le doigt de blocage appartient à un organe de blocage qui est porté par le pêne par rapport auquel il est monté pivotant, autour d'un axe transversal perpendiculaire à la direction axiale de coulissement du pêne, à l'encontre d'un ressort de rappel qui le sollicite angulairement en permanence dans le sens correspondant à la réception du doigt de blocage dans le logement de blocage.

Selon d'autres caractéristiques de l'invention :
- l'extrémité axiale arrière de l'organe de blocage est montée pivotante par rapport au pêne, et le doigt de blocage est formé à l'extrémité axiale avant de l'organe de blocage ;
- le ressort de rappel est un ressort à action axiale qui est interposé entre le boîtier et l'organe de blocage ;
- le ressort de rappel est un ressort de compression qui est interposé entre le boîtier et une face arrière d'appui du corps de l'organe de blocage, et la droite d'action axiale du ressort est située radialement à l'extérieur par rapport à l'axe transversal d'articulation de l'organe de blocage ;
- l'organe de blocage est lié en translation axiale avec le pêne dont il constitue l'organe de commande de ses déplacements ;
- l'organe de blocage est réalisé en une seule pièce avec le pêne ;
- l'organe de blocage est formé à l'extrémité libre avant d'une poutre élastique réalisée en une seule pièce avec le pêne et dont l'extrémité arrière constitue une charnière d'articulation de l'organe de blocage pivotant autour de son axe transversal ;
- le ressort de rappel de l'organe de blocage fait fonction de ressort de pêne pour solliciter axialement en permanence ce dernier vers sa position d'antivol ;
- la partie du pêne qui porte l'organe de blocage est délimitée radialement vers l'intérieur par une face axiale dans laquelle sont formés des moyens de guidage en pivotement de moyens complémentaires d'articulation portés par le corps de l'organe de blocage ;
- le pêne comporte une partie arrière qui est reçue à l'intérieur du boîtier et dont l'extrémité avant porte l'organe de blocage.

D'autres caractéristiques et avantages de l'invention apparaîtront à la lecture de la description détaillée qui va suivre pour la compréhension de laquelle on se reportera aux dessins annexés dans lesquels :

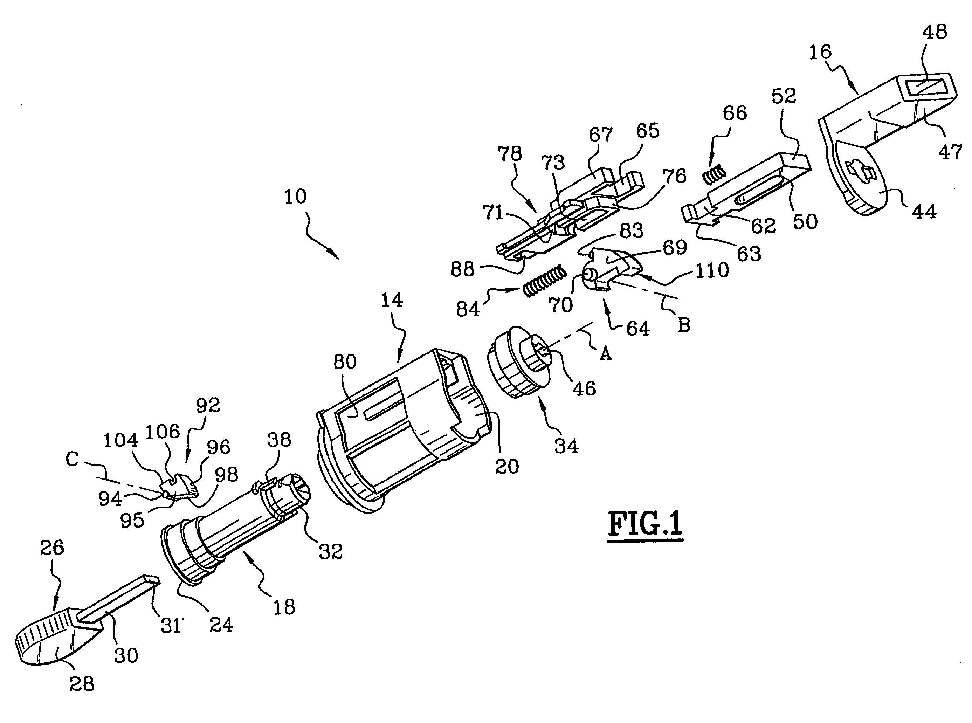

- la figure 1 est une vue en perspective éclatée qui illustre les principaux composants d'un antivol de direction de véhicule automobile réalisé conformément aux enseignements de l'invention, la vue représentant le boîtier de l'antivol par l'arrière;

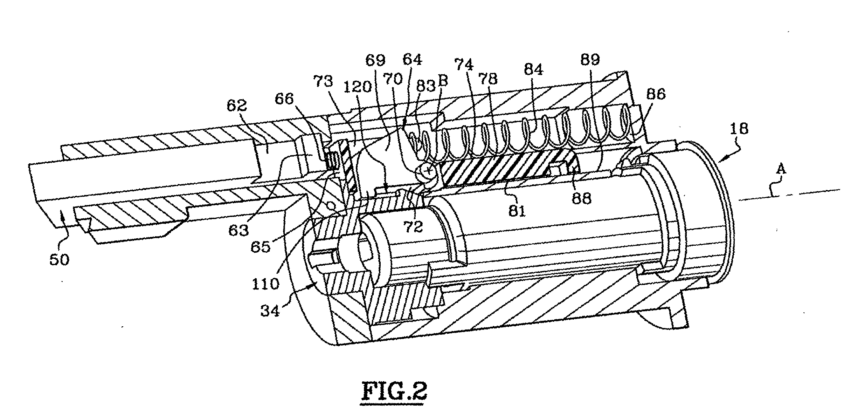

- la figure 2 est une vue de détail à plus grande échelle qui illustre, en perspective de trois-quarts arrière, les principaux composants mobiles de l'antivol de la figure 1 qui sont représentés en position assemblée et sur laquelle le verrou est illustré dan sa position angulaire d'utilisation avec le pêne en position arrière escamotée dans laquelle il est retenu par l'organe de sortie formant came du verrou ;
- la figure 3 est une vue à grande échelle et en perspective de trois-quarts arrière de l'organe de sortie formant came ;
- la figure 4 est une vue similaire à celle de la figure 3 sur laquelle l'organe de sortie est illustré en perspective de trois-quarts avant ;
- la figure 5 est une vue en coupe axiale par un plan vertical passant par l'axe horizontal de rotation du verrou et par l'axe vertical de coulissement du doigt de blocage, sur laquelle le verrou est représenté dans sa position angulaire de repos et en l'absence de clef dans l'antivol ;
- la figure 6 est une vue schématique de dessus de certains des composants de la figure 5 et sur laquelle l'organe de sortie formant came est illustré en développé et qui montre la position relative de l'organe de sortie formant came, de la tirette de commande des déplacements du pêne et de l'organe de retenue de ce dernier ;
- les figures 7 et 8 sont des vues similaires à celles des figures 5 et 6 sur lesquelles le verrou est illustré dans sa position angulaire de repos après retour de sa position d'utilisation ;
- la figure 9 est une vue similaire à celle de la figure 2 qui représente un second mode de réalisation de l'invention dans lequel l'organe de blocage avec son ressort de rappel sont réalisés en une seule pièce avec la tirette de pêne ;
- la figure 10 est une vue similaire à celle de la figure 7 qui illustre le second mode de réalisation de l'invention en position de repos du verrou ; et
- la figure 11 est une vue de détail similaire à la figure 11 sur laquelle le doigt de blocage avec la tirette sont illustrés en position intermédiaire en cours de blocage de la colonne de direction.

Dans la description qui va suivre, afin de faciliter sa compréhension ainsi que celle des revendications, on utilisera à titre non limitatif les termes "horizontal", "vertical", "supérieur", "inférieur", "avant", "arrière", etc.

On a représenté sur les figures un antivol 10 de véhicule automobile qui comporte un boîtier 12 en deux parties moulées arrière 14 et avant 16. La portion inférieure, en considérant les figures, de la partie arrière 14 du boîtier d'antivol délimite un logement cylindrique 20 dans lequel est monté à rotation, autour de l'axe longitudinal A, un verrou rotatif 18 qui est ici illustré de manière schématique sous la forme d'un rotor qui est monté axialement d'arrière en avant, c'est-à-dire de la droite vers la gauche en considérant la figure 5, dans la partie arrière 14 du boîtier 12.

Le verrou rotatif 18, de conception générale connue, comporte un couloir axial 22 qui débouche dans sa face transversale arrière 24 pour l'introduction et l'extraction axiale d'une clef 26 de commande en rotation du verrou 18 qui comporte à cet effet une tête de clef 28 et un corps ou tige de clef 30 prévu pour être reçu dans le couloir 22, la tige 30 et le couloir 22 étant ici à titre d'exemple complémentaires et de section transversale rectangulaire.

Le tronçon d'extrémité libre avant 32 de diamètre réduit du verrou 18 entraîne en rotation dans les deux sens un organe de sortie 34 de forme générale cylindrique annulaire qui comporte un alésage interne 36 arrière de grand diamètre dans lequel est reçue l'extrémité avant 32 du verrou 18, l'entraînement en rotation entre les deux éléments étant assuré par un ergot 38 de la partie 32 reçu dans une encoche complémentaire 37 de l'alésage 36.

La partie cylindrique annulaire avant 40 de plus petit diamètre de l'organe de sortie 34 est guidée en rotation dans un trou 42 formé dans la partie en forme de plaque transversale 44 de la partie avant 16 du boîtier 12.

Le tronçon d'extrémité avant 40 de l'organe de sortie 34 est conformé intérieurement avec une forme 46 qui n'est pas de révolution, notamment pour entraîner en rotation un ensemble commutateur/interrupteur électrique associé à l'antivol 10 qui n'est pas représenté sur les figures.

La partie supérieure en forme de fourreau longitudinal 47 de la partie avant 16 du boîtier 12 qui s'étend longitudinalement vers l'avant, à partir de la plaque 44, délimite un canal interne 48 pour le guidage en coulissement longitudinal, parallèlement à l'axe A, du corps 50 d'un pêne de verrouillage qui est ici de section rectangulaire et dont l'extrémité libre avant 52 est prévue pour être reçue dans une rainure ou cannelure 54 d'orientation axiale d'un arbre de colonne de direction 56 dont l'axe de rotation est globalement perpendiculaire à la direction de coulissement du pêne 50 et à l'axe A du verrou.

Les rainures 54 sont délimitées par des cannelures adjacentes en relief 58 délimitées radialement par des sommets de cannelure 60.

Dans sa partie longitudinale avant, le pêne 50 comporte, dans ses faces latérales, deux encoches ou rainures 62 qui lui confèrent une forme générale de "T" dont la branche transversale arrière 63 est reçue en coulissement axial dans un logement complémentaire 65 formé à l'extrémité libre avant d'une tirette de commande 78 associée au pêne 50, avec interposition d'un ressort hélicoïdal de compression 66 qui sollicite élastiquement en permanence le pêne 50, vers l'avant, par rapport à la tirette 78.

La conception débouchante des rainures 62 et celle en forme de bras en crochets 67 de l'extrémité avant de la tirette 78, qui délimitent entre eux le logement 65, permet un assemblage aisé de ces deux composants, selon la direction radiale, en interposant le ressort 66.

On décrira maintenant en détails la conception de la tirette 78 et de l'organe pivotant 64 qu'elle porte, qui, au sens de l'invention, fait fonction d'organe de commande des déplacements dans les deux sens de la tirette 78, et donc du pêne 50, et fonction d'organe de blocage, comportant un doigt de blocage, comme cela sera expliqué par la suite.

L'organe de commande 64 est une pièce moulée dont le corps 72 est articulé, à son extrémité axile arrière, sur la tirette 78 autour d'un axe transversal d'articulation B qui est orthogonal à l'axe A et qui est situé sensiblement dans le plan axial moyen de la tirette 78.

L'articulation est réalisée par deux tenons, transversalement opposés 70 qui s'étendent depuis les faces latérales verticales parallèles et opposées 69 du corps 72 de l'organe pivotant de commande 64 dont elles déterminent la largeur transversale maximale.

A son extrémité axiale libre avant, le corps 72 comporte un doigt de blocage 110 qui s'étend radialement vers l'intérieur en direction de l'axe A, c'est à dire selon une direction sensiblement perpendiculaire à la direction axiale générale du corps 72.

Au voisinage de son extrémité axiale arrière, le corps 72 comporte une patte transversale supérieure 82 d'appui pour un ressort hélicoïdal de compression 84 dont l'extrémité arrière prend appui contre une surface correspondante 86 de la partie arrière 14 du boîtier 12 de manière à solliciter élastiquement en permanence l'organe de commande et de blocage 64 en pivotement autour de son axe B, dans le sens anti-horaire en considérant la figure 5.

Plus précisément, l'extrémité axiale avant du ressort de pêne.84, qui fait aussi fonction de ressort de rappel de l'organe pivotant 64, est centrée sur un pion 83 qui fait saillie axialement vers l'arrière à partir de la patte 82.

L'agencement et le dimensionnement des composants sont tels que la droite "D" de support de l'effort axial exercé par le ressort 84 sur la patte 82 est située au-dessus de l'axe B, c'est-à-dire qu'elle est décalée radialement vers l'extérieur par rapport à ce dernier, et le ressort 84 s'étend axialement au-dessus de la face supérieure 74 de la tirette 78.

La tirette 78 est une pièce moulée, par exemple en matériau plastique, et sa partie arrière, par rapport à sa partie avant qui comporte les bras 67, est délimitée par une face inférieure 81 dans laquelle débouche verticalement vers le bas un évidement 73 de dimensions telles qu'il reçoit avec jeu transversal le corps 72 de l'organe pivotant de commande et de blocage 64.

Au voisinage de l'extrémité axiale arrière du logement 73, la face inférieure 81 comporte deux logements semi-cylindriques 71, ouverts radialement vers l'axe A, dont chacun reçoit à rotation un tenon complémentaire 70 pour assurer le montage pivotant de l'organe de commande et de blocage 64.

Le logement 73 est bien entendu dimensionné axialement de manière que le doigt de blocage 110 fasse saillie radialement vers l'intérieur en direction de l'axe A.

Grâce à sa conception, l'organe de commande 64 est non seulement monté pivotant par rapport à la tirette 78, mais il est aussi lié à celle-ci en translation axiale de manière univoque, et donc avec le pêne 50 dont il peut commander les déplacements dans les deux sens par l'intermédiaire du ressort 66.

La tirette 78 se présente ainsi globalement sous la forme d'une plaque horizontale d'orientation axiale qui s'étend dans un logement 80 formé dans la partie supérieure de la partie arrière 14 du boîtier 12 au-dessus du verrou 18, ce logement 80 communiquant avec l'alésage 20 pour le guidage à rotation du rotor 18.

L'extrémité axiale arrière 88 de la tirette 78 est de largeur transversale réduite et elle comporte, orientée radialement vers l'intérieur en direction de l'axe A, une patte de retenue 88 de la tirette 78 et du pêne 50.

La patte 88 s'étend en regard de la surface cylindrique externe 89 du corps de verrou 18 dans laquelle est formé, au voisinage de la face transversale arrière 24, un logement 90 de forme globalement parallélépipédique rectangle qui débouche radialement vers l'extérieur et radialement vers l'intérieur dans le couloir de clef 22.

Le logement 90 reçoit un organe 92 en forme de basculeur pour la retenue, dans certaines configurations, de la tirette 78 en position arrière reculée.

A cet effet, le basculeur 92 est monté pivotant autour d'un axe transversal C perpendiculaire à l'axe A, le corps du basculeur 92 comportant à cet effet deux tenons d'articulation 94 qui s'étendent transversalement depuis ses faces latérales d'orientation axiale 95 et 96, et qui sont reçus en articulation dans des parties complémentaires du logement 90.

Pour définir la position effacée du basculeur 92, illustrée notamment à la figure 5, la face inférieure inclinée 98 du basculeur est en appui contre un fond incliné 100 du logement 90 avec la partie 102 d'extrémité inférieure avant du corps de basculeur 92 qui s'étend à l'intérieur du couloir de clef 22 (voir figure 5).

Pour coopérer avec la patte de retenue 88 de la tirette 78, la face supérieure 104 du basculeur 92 est conformée en crochet et comporte à cet effet une encoche 106 qui débouche globalement radialement vers l'extérieur, qui est ouverte dans la face latérale 96 du basculeur 92 visible dans le plan de la figure 5.

Dans sa position effacée illustrée notamment à la figure 5, la partie avant de la face supérieure 104 du basculeur 92 est effacée à l'intérieur du logement 90, c'est-à-dire que la patte arrière 88 de la tirette 78 peut se déplacer axialement d'avant en arrière pour venir axialement au droit du plan transversal dans lequel est formée l'encoche 106, afin de pouvoir être reçue dans cette dernière suite à un basculement de l'organe de retenue 92 autour de son axe C, dans le sens horaire en considérant la figure 5, comme cela sera expliqué par la suite.

Dans sa position illustrée à la figure 5, on voit que la face inférieure 98 du basculeur 92 en appui sur le fond 100 du logement 90 est incliné d'environ 45° de manière à constituer une rampe formant came de commande du pivotement du basculeur 92 lorsque la tige 30 de la clef 26 est introduite axialement dans le couloir 22, sous l'action de sa face transversale d'extrémité libre avant 31 qui coopère avec la face inférieure 98.

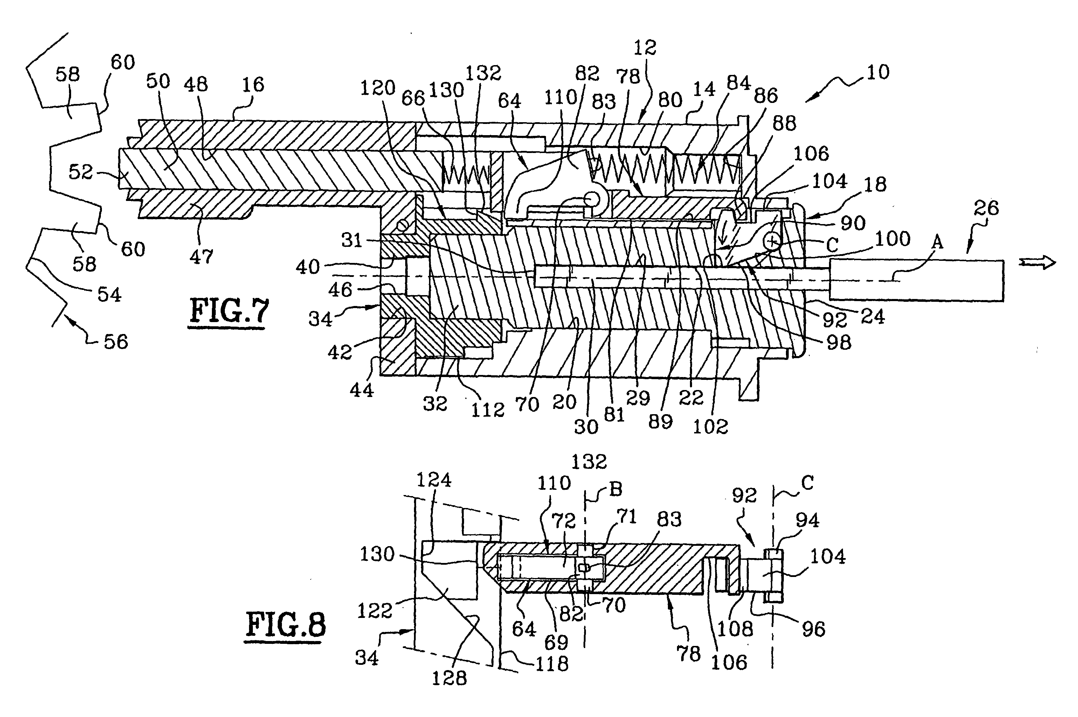

En présence de la clef 26, 30 dans le couloir 22, le basculeur 92 est maintenu dans sa position sortie de retenue illustrée aux figures 5 et 7, dans laquelle il est susceptible de coopérer avec la patte de retenue 88 de la tirette 78, car l'extrémité libre avant de sa face inférieure 98 est en appui contre une face latérale 29 de la tige 30 de la clef 26.

On décrira maintenant en détail l'organe de sortie 34 formant came et sa coopération avec le doigt de blocage associé 110 appartenant à l'organe pivotant de commande et de blocage 64.

La partie principale arrière de plus grand diamètre de l'organe de sortie 34 est délimité par une surface cylindrique formant jupe périphérique 112 qui est délimitée axialement vers l'arrière par un épaulement radial annulaire 114 et qui se prolonge axialement vers l'arrière par la surface cylindrique externe 116 de la partie arrière de plus petit diamètre 40 qui est délimitée par une face transversale d'extrémité arrière 118 annulaire transversale.

Dans la paroi cylindrique 112 est formé un logement de blocage 120 qui est délimité radialement vers l'intérieur par un fond plat 122 d'orientation tangentielle, axialement vers l'avant par une face transversale 124, latéralement d'une part par une facette verticale d'orientation axiale 126 et, d'autre part, par une facette verticale à deux pans formant came ou rampe 128 qui s'étend depuis la face transversale avant 124 jusqu'à la face transversale annulaire arrière 114.

Le logement de blocage 120 est aussi délimité axialement vers l'arrière par une surface transversale verticale de butée 130.

Pour permettre au doigt de blocage 110 de pénétrer axialement d'arrière en avant dans le logement de blocage 120, il est prévu une rampe d'entrée 132 qui est inclinée d'arrière en avant et de bas en haut en s'étendant axialement depuis la face transversale annulaire arrière 118 jusqu'à la surface transversale de butée 130.

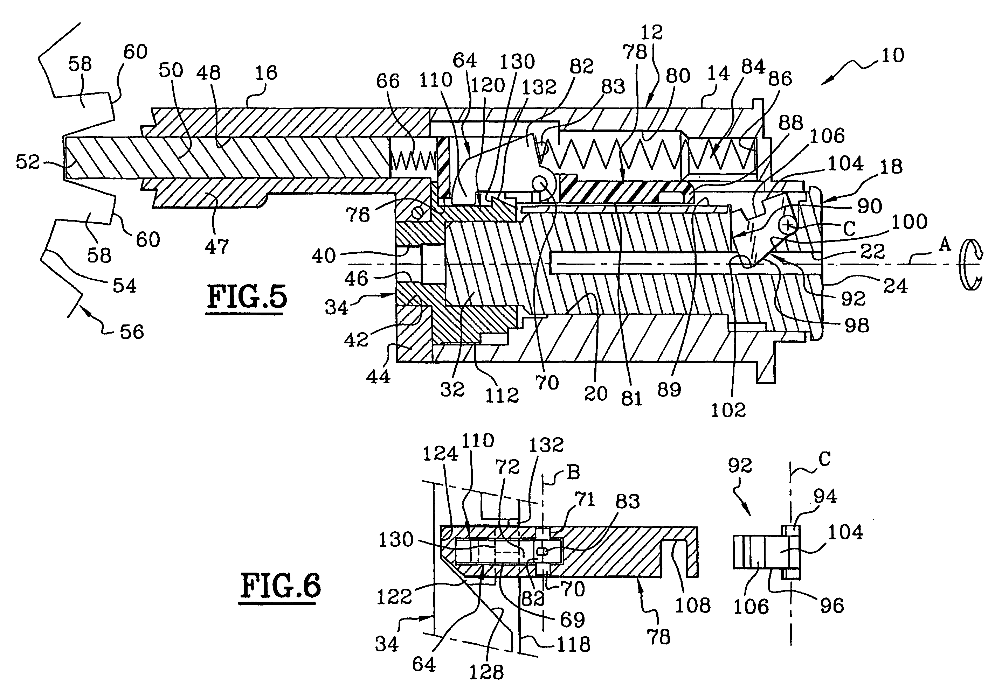

On décrira maintenant le fonctionnement de l'antivol 10 en partant de la position illustrée aux figures 5 et 6. La demande de brevet français FR-A-2.788.477, au contenu de laquelle on pourra se reporter, comporte une description plus complète du fonctionnement.

Dans cette position de repos, le pêne 50 est dans sa position avant d'antivol dans laquelle son extrémité libre 52 est reçue dans une rainure 54 et il est sollicité en permanence par le ressort 66 vers cette position.

Dans cette position de repos illustrée aux figures 5 et 6, le ressort de rappel sollicite axialement la tirette 78 d'arrière en avant avec son bord transversal d'extrémité avant 76 en appui contre le fond transversal arrière 124 du logement de blocage 120.

En cas de tentative d'effraction visant à repousser axialement le pêne d'avant en arrière, c'est-à-dire de la gauche vers la droite en considérant les figures 5 et 6, le pêne 50 entraîne, par l'intermédiaire du ressort 66 comprimé à spires jointives, l'organe de commande 64 et donc le doigt de blocage 110.

La tentative de déplacer le pêne 50 aboutit donc à amener le doigt de blocage 110 en butée contre la surface transversale de butée 130 du logement de blocage 120, ce qui empêche un retrait suffisant du pêne 50 dans le boîtier d'antivol 12, c'est-à-dire ce qui empêche de libérer en rotation l'arbre 56 de la colonne de direction.

Lorsque l'utilisateur introduit une clef conforme 26 dans le couloir de clef 22 il provoque un pivotement dans le sens horaire du basculeur de retenue 92 autour de son axe C.

Etant donné que la tirette 78 est alors dans une position avancée correspondant à la position avant d'antivol du pêne 50, la patte arrière de retenue 88 de la tirette 78 n'est pas en regard du basculeur 92 et le pivotement de ce dernier se fait sans que la patte 88 soit reçue dans l'encoche 106 formant crochet du basculeur de retenue 92.

L'utilisation de l'antivol en vue de permettre le démarrage et l'utilisation du véhicule consiste ensuite à faire tourner la clef dans le sens indiqué par la flèche de la figure 5 pour aboutir à la position d'utilisation dans laquelle le verrou 18 a effectué une course angulaire depuis sa position de repos.

La rotation de la clef 26 et du rotor 18 provoque une rotation correspondante dans le même sens de l'organe de sortie 34.

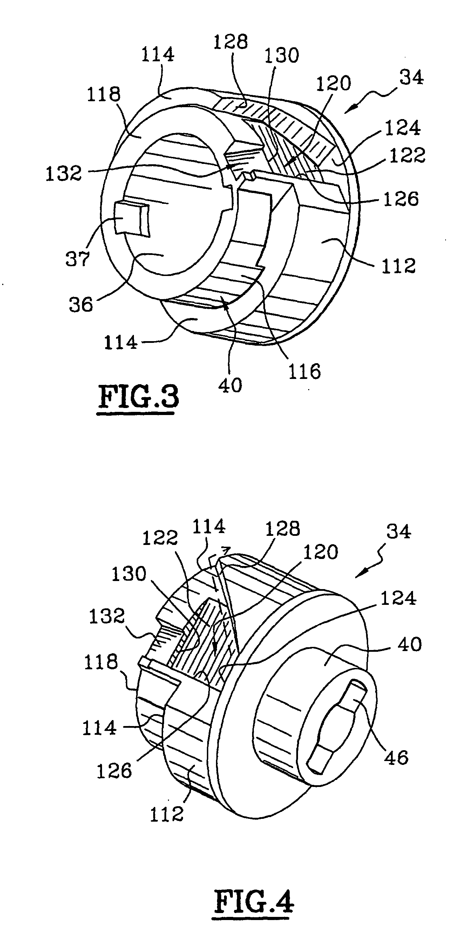

Lors de cette rotation, le doigt de blocage 110 coopère par sa face latérale cylindrique avec la rampe 128 pour provoquer sa sortie hors du logement de blocage 120, selon le trajet indiqué à la figure 4, de manière à venir s'étendre en regard de la surface transversale de butée 114.

Cette sortie du doigt de blocage 110 provoque aussi un déplacement axial d'avant en arrière de l'organe pivotant de commande 64 et donc du pêne 50 qui sort hors des rainures 54 en libérant ainsi l'arbre 56 de la colonne de direction.

La tirette 78 s'est aussi déplacée angulairement par rapport au basculeur de retenue 92 portée par le rotor de verrou 18, le basculeur 92 restant dans sa position active dans laquelle il fait saillie radialement vers l'extérieur tandis que la patte arrière 88 de retenue de la tirette 78 s'est déplacée axialement vers l'arrière, c'est-à-dire qu'elle se situe désormais au droit de l'encoche 106 du basculeur de retenue 92 dans laquelle elle va pouvoir pénétrer ensuite selon la direction tangentielle.

En effet, à partir de la position d'utilisation et après démarrage du moteur du véhicule, l'utilisateur relâche son effort sur la clef 26 et des moyens de rappel élastique (non représentés) du verrou 18 tendent à le ramener vers sa position de repos illustrée aux figures 7 et 8.

Lors du retour vers la position de repos du verrou 18, la patte de retenue 88 pénètre dans l'encoche 106 jusqu'à venir en appui tangentiellement contre le fond 108 de l'encoche de la tirette, le basculeur de retenue 92 restant dans sa position haute dans laquelle il fait saillie radialement pour retenir ainsi axialement la tirette 78, et donc le pêne 50 par l'intermédiaire de l'organe pivotant de commande 64 en position arrière de repos, l'arbre 56 de la colonne de direction demeurant libre en rotation.

Comme on peut le voir à la figure 7, le doigt de blocage 110 s'étend en regard de la rampe 130 mais il ne participe pas directement à la retenue du pêne 50, celle-ci étant assurée par le basculeur 92 et la tirette 78.

En partant de la position illustrée à la figure 7, lorsque l'utilisateur retire axialement la clef d'avant en arrière, la tige 30 sort du couloir de clef 22 et le basculeur de retenue 92 retombe dans le couloir de clef 22, c'est-à-dire qu'il pivote dans le sens anti-horaire autour de son axe de basculement C.

Le pivotement aboutit à libérer la patte de retenue 88 qui n'est plus retenue par le crochet 106 et la tirette 78 est alors immédiatement sollicitée élastiquement vers l'avant, c'est-à-dire de la droite vers la gauche par le ressort 84 pour venir occuper de nouveau sa position illustrée à la figure 5. Lors de ce retour du pêne 50 avec la tirette 78 vers sa position avant de verrouillage de l'arbre 56 de la colonne de direction, le doigt de blocage 110 monte sur la rampe 130 pour pénétrer à nouveau dans le logement de blocage 120 en venant en appui radial contre le fond 122 de ce dernier sous l'action du ressort de blocage 84.

Si le pêne 50 n'est pas en regard d'une rainure 54 mais se trouve au contraire en regard du sommet 60 d'une cannelure 58, sa course axiale vers l'avant est limitée et il demeure dans une position intermédiaire grâce à la présence du ressort 66.

La tirette 78, avec l'organe pivotant de commande et de blocage 64 qui comporte le doigt de blocage 110, sont dans une position axiale intermédiaire car l'organe pivotant de commande et de blocage 64 est en appui contre le ressort à spires jointives 66.

Pour finir de bloquer l'arbre 56 de la colonne de direction, le conducteur fait tourner ce dernier jusqu'à ce que le pêne 50 soit en regard d'une rainure 54.

Dès que cette position angulaire de l'arbre de colonne de direction 56 est atteinte, le pêne 50 avec la tirette 78 se déplace globalement axialement vers l'avant pour occuper à nouveau la position illustrée aux figures 5 et 6.

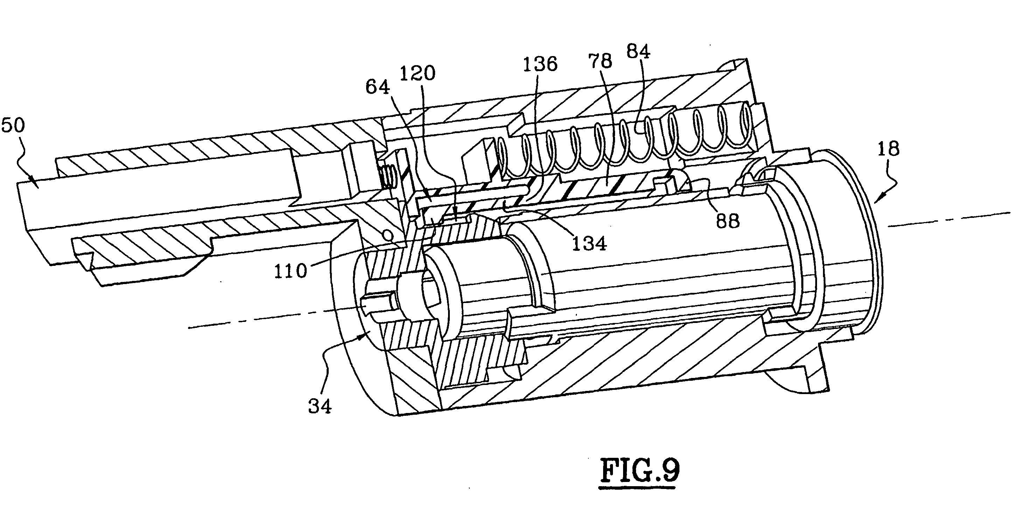

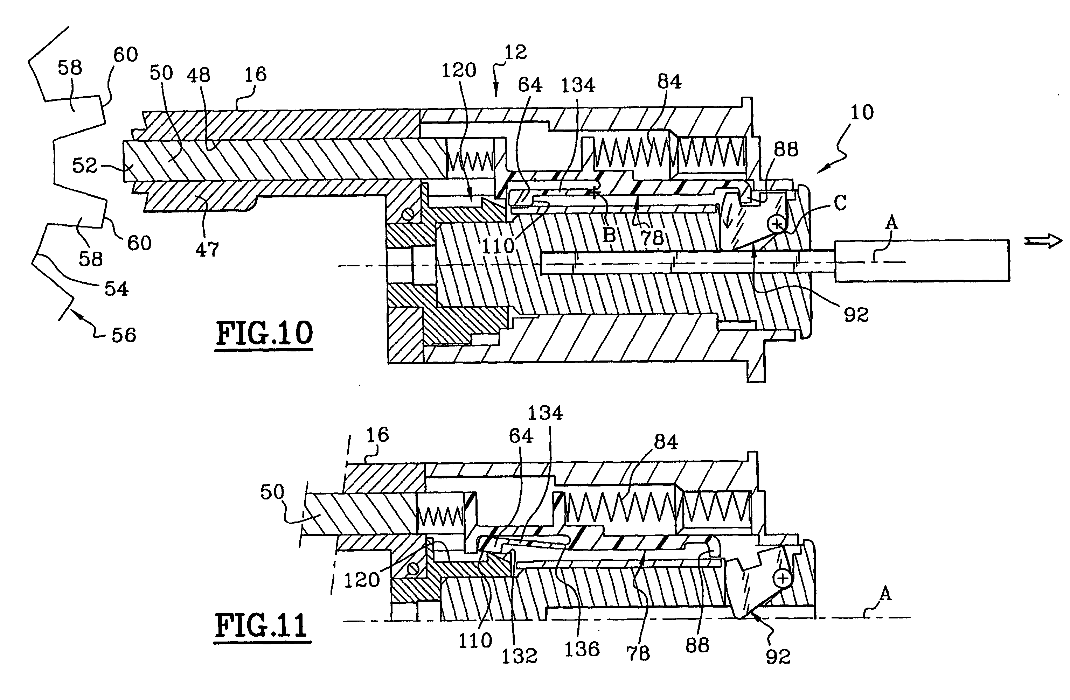

On décrira maintenant le second mode de réalisation illustré aux figures 9 à 11 sur lesquelles des éléments identiques ou analogues à ceux décrits et représentés précédemment sont désignés par les mêmes chiffres de référence.

Comme on peut le voir sur ces figures, l'organe de blocage 64 en forme de doigt de blocage pivotant 64, 110 est réalisé en une seule pièce par moulage en matière plastique avec le corps de la tirette 78.

Plus précisément, le doigt de blocage 64, 110 est formé à l'extrémité libre avant d'une poutre 134 dont l'extrémité arrière 136 est reliée au corps de la tirette pour constituer une zone d'articulation permettant un pivotement dans les deux sens de l'organe de blocage autour d'un axe transversal B situé sensiblement au droit de la zone 136.

Grâce à cette conception, c'est la poutre élastique 134 qui fait fonction de ressort de rappel de l'organe de blocage pivotant 64, 110.

Bien entendu, et comme on peut le voir aux figures 9 à 11, il faut alors prévoir à nouveau un ressort de tirette 84 qui agit entre le boîtier et la tirette comme dans la demande brevet français FR-A-2.788.477.

La réalisation et l'assemblage de ce second mode de réalisation sont grandement simplifiés, tandis que son fonctionnement est en tous points identique à celui du premier mode de réalisation décrit précédemment.

## Revendications

1. Antivol (10) de direction de véhicule automobile du type comportant un boîtier (12, 14, 16) dans lequel un verrou (18) est monté à rotation entre une position angulaire de repos dans laquelle une clef conforme (26, 30) peut être introduite, d'arrière en avant, ou retirée axialement, et au moins une position angulaire d'utilisation, dans laquelle la clef (26, 30) ne peut être extraite du verrou (18), le verrou comportant un organe de sortie rotatif (34) formant came qui est susceptible de coopérer avec un organe de commande (64) porté par un pêne (50, 78) pour commander les déplacements de ce dernier qui est monté coulissant dans le boîtier (12), selon une direction axiale, entre une position avant d'antivol vers laquelle il est sollicité élastiquement et dans laquelle il fait saillie axialement vers l'avant à travers une ouverture du boîtier pour bloquer en rotation un organe (56) de la colonne de direction lorsque le verrou (18) est en position de repos, clef extraite, et une position arrière escamotée à l'intérieur du boîtier, et du type dans lequel :
- le pêne (50, 78) porte un doigt de blocage (110) escamotable qui fait saillie radialement vers l'axe (A) pour être reçu dans un logement de blocage (120) formé dans une face latérale en vis-à-vis (112) de l'organe de sortie (34), d'orientation axiale, lorsque le pêne (50, 78) est en position avant d'antivol, pour empêcher ou limiter tout déplacement du pêne vers sa position arrière escamotée ;
- le doigt de blocage (110) s'efface automatiquement lors de la rotation du verrou (18), depuis sa position de repos vers sa position d'utilisation ;
- et le pêne (50, 78) est retenu axialement en position arrière escamotée, en présence d'une clef, par un organe de retenue de pêne (92) qui est monté mobile entre une position effacée, en l'absence de clef, et une position de retenue en présence d'une clef,
**caractérisé en ce que** le doigt de blocage (110) appartient à l'organe de blocage (64) qui est porté par le pêne (78) par rapport auquel il est monté pivotant, autour d'un axe transversal (B) perpendiculaire à la direction axiale de coulissement du pêne, à l'encontre d'un ressort (84, 134) de rappel qui le sollicite angulairement en permanence dans le sens correspondant à la réception du doigt de blocage (110) dans le logement de blocage (120).

2. Antivol selon la revendication 1, **caractérisé en ce que** l'extrémité axiale arrière (70) de l'organe de blocage (64, 110) est montée pivotante par rapport au pêne (78), et **en ce que** le doigt de blocage (110) est formé à l'extrémité axiale avant de l'organe de blocage (64).

3. Antivol selon la revendication 2, **caractérisé en ce que** le ressort de rappel (84) est un ressort à action axiale qui est interposé entre le boîtier et l'organe de blocage (64, 110).

4. Antivol selon la revendication 3, **caractérisé en ce que** le ressort de rappel (84) est un ressort de compression qui est interposé entre le boîtier et une face arrière (86) d'appui du corps (72) de l'organe de blocage (64, 110), et **en ce que** la droite d'action axiale du ressort est située radialement à l'extérieur par rapport à l'axe (B) transversal d'articulation de l'organe de blocage (64, 110).

5. Antivol selon l'une des revendications 1 ou 2, **caractérisé en ce que** l'organe de blocage (64, 110) est réalisé en une seule pièce avec le pêne (50, 78).

6. Antivol selon la revendication précédente, **caractérisé en ce que** l'organe de blocage (64, 110) est formé à l'extrémité libre avant d'une poutre élastique (134) réalisée en une seule pièce avec le pêne (78) et dont l'extrémité arrière (136) constitue une charnière d'articulation de l'organe de blocage pivotant (64, 110) autour de son axe transversal (B).

7. Antivol selon l'une quelconque des revendications précédentes, **caractérisé en ce que** l'organe de blocage (64, 110) est lié en translation axiale avec le pêne (50, 78) dont il constitue l'organe de commande de ses déplacements.

8. Antivol selon la revendication 7 prise en combinaison avec la revendication 4, **caractérisé en ce que** le ressort de rappel (66) de l'organe de blocage (64, 110) fait fonction de ressort de pêne pour solliciter axialement en permanence ce dernier (50, 78) vers sa position d'antivol.

9. Antivol selon l'une des revendications 7 ou 8, **caractérisé en ce que** la partie du pêne (78) qui porte l'organe de blocage (64, 110) est délimitée radialement vers l'intérieur par une face axiale (81) dans laquelle sont formés des moyens (71) de guidage en pivotement de moyens complémentaires d'articulation (70) portés par le corps de l'organe de blocage (64, 110).

10. Antivol selon l'une quelconque des revendications des revendications 1 à 4, **caractérisé en ce que** le pêne (50, 78) comporte une partie arrière (78) qui est reçue à l'intérieur du boîtier (18, 80) et dont l'extrémité avant (76) porte l'organe de blocage (64, 110).

## Patentansprüche

1. Lenkschloß (10) für ein Kraftfahrzeug mit einem Gehäuse (12, 14, 16), in dem ein Schließzylinder (18) zwischen einer Ruhestellung, in der ein entsprechender Schlüssel (26, 30), von hinten nach vorne, einführbar oder axial herausziehbar ist, und mindestens einer Gebrauchsstellung drehbar angeordnet ist, in welcher der Schlüssel (26, 30) nicht aus dem Schließzylinder (18) herausziehbar ist, wobei der Schließzylinder ein drehbares Abtriebselement (34) umfaßt, welches einen Nocken bildet, der in der Lage ist, mit einem Betätigungselement (64) zusammenzuwirken, wobei das Betätigungselement von einem Riegel (50, 78) getragen wird, um die Verschiebung des Letzteren zu bewirken, wobei der Riegel in axialer Richtung zwischen einer vorderen Verriegelungsstellung, in der er elastisch beaufschlagt ist und in der er axial nach vorne quer zu einer Öffnung des Gehäuses vorsteht, um ein Element (56) der Lenksäule hinsichtlich der Drehung zu blockieren, wenn der Schließzylinder (18) sich in der Ruhestellung befindet und der Schlüssel herausgezogen ist, sowie einer hinteren in das Innere des Gehäuses eingezogenen Stellung verschiebbar angeordnet ist, und wobei:
- der Riegel (50, 78) einen versenkbaren Sperrfinger (110) trägt, der radial in Richtung auf die Achse (A) hervorsteht, um von einem Blockiersitz (120) aufgenommen zu werden, der gegenüberliegend in einer seitlichen Fläche (112) des Abtriebselementes (34), mit axialer Orientierung, angeordnet ist, wenn der Riegel (50, 78) sich in der vorderen Verriegelungsstellung befindet, um jede Verschiebung des Riegels in seine hintere eingezogene Stellung zu verhindern oder zu begrenzen;
- der Sperrfinger ( 110) bei Drehung des Schließzylinders (18) automatisch von seiner Ruhestellung in seine Gebrauchsstellung zurückbewegt wird; und
- der Riegel (50, 78) bei Anwesenheit eines Schlüssels in der axialen hinteren versenkten Stellung durch ein Rückhalteelement (92) des Riegels zurückgehalten wird, welches beweglich zwischen einer Ausgangsstellung, in Abwesenheit des Schlüssels, und einer zurückhaltenden Stellung, bei Anwesenheit eines Schlüssels, angeordnet ist,
**dadurch gekennzeichnet, daß** der Sperrfinger (110) zu dem von dem Riegel (78) getragenen Sperrelement (64) gehört, in bezug auf den das Sperrelement um eine querliegende Achse (B) senkrecht zur axialen Richtung der Verschiebung des Riegels entgegen einer Rückholfeder (84, 134) schwenkbar angeordnet ist, die es ständig in dem Sinne belastet, daß der Sperrfinger (110) in den Sperrsitz (120) eingreift.

2. Lenkschloß nach Anspruch 1, **dadurch gekennzeichnet, daß** das axiale hintere Ende (70) des Sperrelementes (64, 110) schwenkbar in bezug auf den Riegel (78) angeordnet ist, und daß der Sperrfinger (110) als axiales vorderes Ende des Sperrelementes (64) ausgebildet ist.

3. Lenkschloß nach Anspruch 2, **dadurch gekennzeichnet, daß** es sich bei der Rückholfeder (84) um eine axial wirkende Feder handelt, die zwischen dem Gehäuse und dem Sperrelement (64, 110) eingefügt ist.

4. Lenkschloß nach Anspruch 3, **dadurch gekennzeichnet, daß** es sich bei der Rückholfeder (84) um eine Druckfeder handelt, die zwischen dem Gehäuse und einer hinteren Stützfläche des Körpers (72) des Sperrelementes (64, 110) eingefügt ist, und daß die Wirkachse der Feder in bezug auf die querliegende Achse (B) des Gelenkes des Sperrelementes (64, 110) radial nach außen verschoben liegt.

5. Lenkschloß nach einem der Ansprüche 1 oder 2, **dadurch gekennzeichnet, daß** das Sperrelement (64, 110) einstückig mit dem Riegel (50, 78) verbunden ist.

6. Lenkschloß nach dem vorhergehenden Anspruch, **dadurch gekennzeichnet, daß** das Sperrelement (64, 110) an dem vorderen freien Ende eines elastischen Trägers (134) angeordnet ist, welches einstückig mit dem Riegel (78) verbunden ist und dessen hinteres Ende (136) ein Gelenk zum Verschwenken des schwenkbaren Sperrelementes (64, 110) um seine querverlaufende Achse (B) bildet.

7. Lenkschloß nach einem der vorhergehenden Ansprüche, **dadurch gekennzeichnet, daß** das Sperrelement (64, 110) hinsichtlich einer axialen Verschiebung mit dem Riegel (50, 78) verbunden ist, und dessen Betätigungselement zu seiner Verschiebung bildet.

8. Lenkschloß nach Anspruch 7 in Verbindung mit Anspruch 4, **dadurch gekennzeichnet, daß** die Rückholfeder (66) des Sperrelementes (64, 110) die Funktion der Feder des Riegels übernimmt, um Letzteren (50, 78) ständig axial in Richtung auf die Verriegelungsstellung zu belasten.

9. Lenkschloß nach einem der Ansprüche 7 oder 8, **dadurch gekennzeichnet, daß** der Bereich des Riegels (78), der das Sperrelement (64, 110) trägt, radial nach innen durch eine axiale Fläche (81) begrenzt ist, in welcher Mittel (71) zur Führung der Schwenkbewegung der entsprechenden verschwenkbaren Mittel (70) des Körpers der Sperrelementes (64, 110) vorgesehen sind.

10. Lenkschloß nach einem der Ansprüche 1 bis 4, **dadurch gekennzeichnet, daß** der Riegel (50, 78) ein hinteres Teil (78) umfaßt, das von dem Inneren des Gehäuses (18, 80) aufgenommen wird und dessen vorderes Ende (76) das Sperrelement (64, 110) trägt.

## Claims

1. A motor vehicle anti-theft steering lock of the type comprising a housing (12, 14, 16) in which a lock (18) is mounted for rotation between an angular rest position, in which a correct key (26, 30) may be introduced in a forward direction, or withdrawn axially, and at least one angular working position in which the key (26, 30) cannot be extracted from the lock (18), the lock including a rotatable output member (34) defining a cam which is able to cooperate with a control member (64) carried by a bolt (50, 78) whereby to control the displacements of the latter, which is mounted for sliding movement in the housing (12) in an axial direction, between a forward or anti-theft position towards which it is biased axially and in which it projects axially forward through an aperture of the housing in order to block against rotation a member (56) of the steering column when the lock (18) is in its rest position, the key being removed, and a rear position retracted into the housing, and of the type in which:
- the bolt (50, 78) carries a retractable stop finger (110) which projects radially towards the axis (A) so as to be received in a stop cavity (120), which is formed in an axially oriented side face ( 112) of the output member (34) in facing relationship when the bolt (50, 78) is in its front or anti-theft position, whereby to prevent or limit any displacement of the bolt towards its rear or retracted position;
- the stop finger (110) is withdrawn automatically during rotation of the lock (18) from its rest position to its working position;
- and the bolt (50, 78) is retained axially in its rear or retracted position in the presence of a key, by a bolt retaining member (92) which is mounted for movement between a withdrawn position in the absence of a key, and a retaining position in the presence of a key,
**characterised in that** the stop finger (110) is part of a stop member (64) which is carried by the bolt (78) with respect to which it is mounted for pivoting movement about a transverse axis (B) at right angles to the axial direction of sliding movement of the bolt, against the action of a return spring (84, 134) which biases it permanently and angularly in the direction corresponding to reception of the stop finger (110) in the stop cavity (120).

2. An anti-theft lock according to Claim 1, **characterised in that** the rear axial end (70) of the stop member (64, 110) is mounted for pivoting movement with respect to the bolt (78), and **in that** the stop finger (110) is formed at the front axial end of the stop member (64).

3. An anti-theft lock according to Claim 2, **characterised in that** the return spring (84) is an axially acting spring which is interposed between the housing and the stop member (64, 110).

4. An anti-theft lock according to Claim 3, **characterised in that** the return spring (84) is a compression spring which is interposed between the housing and a rear abutment face (86) of the body (72) of the stop member (64, 110), and **in that** the line of axial action of the spring is situated radially outside with respect to the transverse articulation axis (B) of the stop member (64, 110).

5. An anti-theft lock according to Claim 1 or Claim 2, **characterised in that** the stop member (64, 110) is made in one piece with the bolt (50, 78).

6. An anti-theft lock according to the preceding Claim, **characterised in that** the stop member (64, 110) is formed at the free front end of an elastic beam element (134), which is formed in one piece with the bolt (78), and the rear end (136) of which constitutes a hinge for articulation of the pivoting stop member (64, 110) about its transverse axis (B).

7. An anti-theft lock according to any one of the preceding Claims, **characterised in that** the stop member (64, 110) is coupled in axial translation with the bolt (50, 78), of which it constitutes the organ for control of its displacements.

8. An anti-theft lock according to Claim 7 taken in combination with Claim 4, **characterised in that** the return spring (66) of the stop member (64, 110) acts as a bolt spring for biasing the latter (50, 78) permanently in the axial direction towards its anti-theft position.

9. An anti-theft lock according to Claim 7 or Claim 8, **characterised in that** the portion of the bolt (78) that carries the stop member (64, 110) is delimited radially on the inside by an axial face (81 ) in which means (71) are formed for guiding in pivoting motion complementary pivot means (70) carried by the body of the stop member (64, 110).

10. An anti-theft lock according to any one of Claims 1 to 4, **characterised in that** the bolt (50, 78) has a rear portion (78) which is received within the housing (18, 80), with its front end (76) carrying the stop member (64, 110).
